# EUROPÄISCHE PATENTSCHRIFT

(11) **EP 1 841 833 B1**
(45) Veröffentlichungstag und Bekanntmachung des Hinweises auf die Patenterteilung: **16.12.2009**
(21) Anmeldenummer: 06706316.4
(22) Anmeldetag: 19.01.2006
(51) Int. Cl.: C09K 8/57, C09K 8/575, C09K 8/60

(54) **HYDROLYTISCH UND HYDROTHERMAL BESTÄNDIGE KONSOLIDIERUNG ODER ÄNDERUNG DES BENETZUNGSVERHALTENS VON GEOLOGISCHEN FORMATIONEN**
HYDROLYTICALLY AND HYDROTHERMALLY STABLE CONSOLIDATION OR MODIFICATION OF THE WETTING BEHAVIOR OF GEOLOGICAL FORMATIONS
CONSOLIDATION A RESISTANCE HYDROLYTIQUE ET HYDROTHERMIQUE OU MODIFICATION DU COMPORTEMENT DE MOUILLAGE DE FORMATIONS GEOLOGIQUES

(30) Priorität: 20.01.2005 DE 102005002805
(43) Veröffentlichungstag der Anmeldung: 10.10.2007
(73) Patentinhaber: EPG (Engineered nanoProducts Germany) AG, 66121 Saarbrücken (DE)
(72) Erfinder: SCHMIDT, Helmut, 66130 Saarbrücken-Güdingen (DE); REINHARD, Bernd, 66663 Merzig-Brotdorf (DE); ENDRES, Klaus, 66424 Homburg (DE)
(74) Vertreter: Barz, Peter
(86) Internationale Anmeldenummer: PCT/EP2006/000465
(87) Internationale Veröffentlichungsnummer: WO 2006/077125

(56) Entgegenhaltungen:
- WO-A-93/04140
- WO-A-2005/073278
- US-A- 3 199 590
- US-A1- 2001 019 773
- US-A1- 2003 031 788
- US-B1- 6 287 639

## Beschreibung

Die Erfindung betrifft ein Verfahren für eine hydrolytisch und hydrothermal beständige Konsolidierung oder für eine Änderung des Benetzungsverhaltens von porösen oder partikulären geologischen Formationen.

Bindemittel sind insbesondere für das Binden von kompakten oder körnigen Systemen von hoher Bedeutung. In der Erdölindustrie hat sich besonders das Verfestigen von körnigen Systemen wie geologischen Formationen zur Stabilisierung von Ölquellen und zur Verfestigung von Sandformationen in den Lagerstätten als eine extrem wichtige Maßnahme herausgestellt. Findet eine solche Verfestigung nicht statt, so wird Sand mit heraus transportiert und führt zu Schäden an Transporteinrichtungen (Pumpen, Rohre). Wesentliches Element solcher Verfestigungsmaßnahmen ist die Gewährleistung einer ausreichenden Porosität der Lagerstätten, da der Ölfluss nicht reduziert werden darf. Es sind Bindemittel erforderlich, die unter den Bedingungen eines Bohrlochs (hoher Druck bei hoher Temperatur, Wassergehalt und aggressive Rohöle) beständig sind.

Für eine effiziente Anwendung solcher Bindemittel ist es jedoch von erheblicher Bedeutung, dass die Beständigkeit unter den oben genannten aggressiven Bedingungen möglichst lange aufrechterhalten bleibt, wobei die Bindefestigkeit und die anhaltende Porosität nicht nennenswert reduziert werden darf. Die im Stand der Technik genannten Systeme, die nahezu alle auf organischen Polymeren aufbauen, haben diesbezüglich eine sehr eingeschränkte Lebensdauer.

Eine Konsolidierung von geologischen Formationen mit geeigneten Bindemitteln ist insbesondere dann schwierig, wenn die konsolidierten geologischen Formationen im Vergleich mit den unkonsolidierten geologischen Formationen nicht nennenswert an Porosität einbüßen sollen. So lassen sich z.B. mit organischen Polymerbindemitteln poröse Systeme herstellen, jedoch zeigt sich, dass es kaum möglich ist, die ursprüngliche Porosität weitgehend aufrecht zu erhalten. Bei reduziertem Bindemitteleinsatz gelingt es zwar poröse Systeme herzustellen, aufgrund der Eigenschaft der organischen Polymere in Gegenwart von organischen Lösungsmitteln aufzuquellen oder in Lösung zu gehen, sind solche Konsolidierungen jedoch für viele Anwendungen, insbesondere bei höheren Temperaturen und in Umgebung organischer Flüssigkeiten, nicht geeignet.

Die Verwendung von rein anorganischen Bindemitteln, die z. B. über den Sol-Gel Prozess zugänglich sind, führt zwar zu einer Bindung, bei der eine entsprechende Porosität aufrecht erhalten wird, jedoch ist das gebundene System sehr spröde, brüchig und gegenüber mechanischen Belastungen wie Scherbelastungen oder starken Druckbelastungen nicht ausreichend widerstandsfähig.

Ein Problem ist auch die Hydrolysestabilität des Konsolidierungsmittels, da nach dem Stand der Technik verwendete Konsolidierungsmittel bei Kontakt mit Wasser, z.B. unter Bohrlochbedingungen hydrolysieren, so dass konsolidierte geologische Formationen ihre durch das Konsolidierungsmittel erhaltene Festigkeit nach einiger Zeit wieder verlieren.

Ferner herrschen in geologischen Formationen in der Regel ein erhöhter Druck und eine erhöhte Temperatur. Daher ist es notwendig, die zur Verfestigung notwendige Härtung unter einem erhöhten Druck und erhöhter Temperatur durchzuführen. Dies ist aber bei vielen Konsolidierungsmitteln gar nicht oder nur eingeschränkt möglich.

Ein wichtiges Spezialgebiet der Konsolidierung von geologischen Formationen ist die Erdölförderung, bei der Bohrlöcher oft in nicht-konsolidierte geologische Formationen vorgetrieben werden. Insbesondere bei der Off-shore-Förderung handelt es sich hierbei um sandhaltige geologische Formationen, die konsolidiert werden müssen, um ein Eindringen von Sand und anderen Gesteinspartikeln in das Bohrloch mit damit verbundener Beschädigung der Förderanlagen und Verunreinigung des geförderten Erdöls zu vermeiden. Zur Konsolidierung von derartigen Sandlagerstätten wird herkömmlicherweise ein dreistufiges Verfahren angewandt. Zunächst wird über eine Sonde ein Kunstharzbindemittel injiziert, worauf man dieses durch Injektion eines Aktivierungssystems abbindet. In einem dritten Schritt wird ein System zum Steuern der Permeabilität und zum Verdrängen von überschüssigem Harzbindemittel eingespritzt.

Weiter besteht häufig ein Interesse daran, das Benetzungsverhalten von geologischen Formationen zu ändern. Dadurch könnte man zum Beispiel den Ausbeutegrad bei ölführenden geologischen Formationen erhöhen. Auch bei der Reinigung von toxikologisch belasteten Böden oder ölverschmutzten Sandformationen kann eine Änderung des Benetzungsverhaltens dieser Böden äußerst hilfreich sein.

WO-A-93/04140 beschreibt ein Mittel zur Verfestigung von Böden, das als gerüstbildende Precursoren Alkoxysilane und/oder Aluminiumalkoholate und gegebenenfalls als gerüstmodifizierenden Precursor 0,1 bis 15 Masse % anderer Stoffe wie z.B. Borsäure umfasst. Das in WO-A-93/04140 beschriebene Verfahren umfasst die Einbringung des Mittels in ein Wasser enthaltendes Material, das zu verfestigen ist, wodurch es zur Verfestigung kommt.

US-A-2003/031788 betrifft ein Verfahren zur Veränderung der Benetzbarkeit einer Formation, bei dem ein wässriges Fluid in die Formation eingebracht wird, um sie damit zu beschichten. Das Fluid umfasst Nanopartikel aus organischen und anorganischen Komponenten, wobei die anorganische Komponente insbesondere aus Silicium, Aluminium, Titan, Zirconium und Kombinationen davon ausgewählt werden kann.

WO-A-2005/073278, ein Dokument gemäß Art. 54 (3) und (4) EPÜ, beschreibt ein Konsolidierungsmittel und dessen Verwendung zur Konsolidierung von Formkörpern und geologischen Formationen, wobei das Konsolidierungsmittel ein Hydrolysat oder Vorkondensat von mindestens einem Organosilan mit einer hydrolytisch nicht abspaltbaren Gruppe und mindestens einem hydrolysierbaren Silan, das nur hydrolytisch abspaltbare Gruppen oder Hydroxygruppen enthält, umfasst. Das Hydrolysat oder Vorkondensat kann gegebenenfalls in Gegenwart einer Metallverbindung hergestellt werden.

Aufgabe der Erfindung war es, Verfahren zur Konsolidierung oder zur Änderung des Benetzungsverhaltens einer geologischen Formation bereitzustellen. Die Konsolidierung soll insbesondere hydrolysestabil und hydrothermal beständig sein, auch unter korrosiven Bedingungen, so dass auch über Jahre ihre Funktion erfüllt wird. Dabei soll die Porosität der ungebundenen Phase in großem Umfang erhalten bleiben. Ferner soll eine gute Bindefestigkeit bei ausreichender Flexibilität erreicht werden. Die Konsolidierung sollte auch unter hydrothermalen Bedingungen, d. h. unter erhöhtem Druck und erhöhter Temperatur, möglich sein. Schließlich sollte bei entsprechender Anpassung auch eine Änderung des Benetzungsverhaltens von Formationen durchführbar sein.

Die Aufgabe wurde gelöst durch ein Verfahren für eine hydrolytisch und hydrothermal beständige Konsolidierung oder für eine Änderung des Benetzungsverhaltens von porösen oder partikulären geologischen Formationen, bei dem man
(A) ein Konsolidierungsmittel, umfassend ein Hydrolysat oder Vorkondensat von
   (a) mindestens einem Organosilan der allgemeinen Formel (I)

      RₙSiX₄₋ₙ (I)

      worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
   (b) gegebenenfalls mindestens einem hydrolysierbaren Silan der allgemeinen Formel (II)

      SiX₄ (II)

      worin die Reste X die vorstehende Bedeutung haben; und
   (c) mindestens einer hydrolysierbaren Metallverbindung der allgemeinen Formel (III)

      MXₐ (III)

      worin M ein Metall der Hauptgruppen III bis V oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
   wobei das molare Verhältnis von eingesetzten Siliciumverbindungen zu eingesetzten Metallverbindungen im Bereich von 8000:1 bis 8:1 liegt, in die geologische Formation infiltriert oder injiziert und
(B) das Konsolidierungsmittel bei einer Temperatur höher als 20°C und einem Druck größer 1 bar härtet,
wobei das Konsolidierungsmittel vor der Vermengung mit der geologischen Formation partikelfrei vorliegt und das Konsolidierungsmittel für den Fall, dass es zur Änderung des Benetzungsverhaltens der Formation eingesetzt wird, auch eine oleophobe und hydrophobe Komponente umfasst.

Ausführliche Untersuchungen haben ergeben, dass diese Konsolidierungsmittel auch im Autoklaven bei hohem Druck und hoher Temperatur auch über einen längeren Zeitraum nicht abgebaut werden und auch unter diesen Bedingungen weiterhin eine stabile Bindung bilden. Bei Verwendung einer benetzungsregulierenden Konsolidierungsvariante konnte aufgezeigt werden, dass das eingestellte Benetzungsverhalten nach einer Hydrothermalbehandlung in korrosivem Medium erhalten bleibt. Bei der Konsolidierung wird auch die Porosität nur in geringem Maß reduziert.

Der Einsatz von hydrolysierbaren Metallverbindungen der Formel (III) bringt zwei Vorteile mit sich. Überraschenderweise wurde nämlich bei Konsolidierungsmitteln, die diese Metallverbindungen enthalten, gegenüber solchen ohne diese Metallverbindung eine besonders gute Hydrolysestabilität und Hydrothermalbeständigkeit der gehärteten Konsolidierungsmittel festgestellt, auch unter den extrem aggressiven Bedingungen wie sie z.B. in Reservoirs vorliegen (korrosive Hydrothermalbelastung). Es sind somit sogar langzeitstabile, für Fluide in Reservoiren permeable Konsoldierungen unter korrosiver Hydrothermalbelastung möglich.

Ein weiterer Vorteil besteht darin, dass sich Konsolidierungsmittel überraschenderweise auch unter erhöhtem Druck härten lassen.

Das Konsolidierungsmittel umfasst ein Hydrolysat oder Vorkondensat von
(a) mindestens einem Organosilan der allgemeinen Formel (I)

   RₙSiX₄₋ₙ (I)

   worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat;
(b) gegebenenfalls mindestens einem hydrolysierbaren Silan der allgemeinen Formel (II)

   SiX₄ (II)

   worin die Reste X die vorstehende Bedeutung haben, und
(c) mindestens einer Metallverbindung der allgemeinen Formel (III)

   MXₐ (III)
worin M ein Metall der Hauptgruppen III bis V oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht.

Geeignete Beispiele für hydrolytisch abspaltbare Gruppen X der obigen Formeln sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen, Hydroxy, Alkoxy, Amino oder Epoxy, enthalten.

Bevorzugte hydrolytisch abspaltbare Reste X sind Halogen, Alkoxygruppen und Acyloxygruppen. Besonders bevorzugte hydrolytisch abspaltbare Reste sind C₂₋₄-Alkoxygruppen, insbesondere Ethoxy.

Die hydrolytisch nicht abspaltbaren Reste R der Formel (I) sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Ethinyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl.

Die Reste R können übliche Substituenten aufweisen, bei denen es sich um funktionelle Gruppen handeln kann, über die nach Bedarf auch eine Vernetzung des Kondensats über organische Gruppen möglich ist. Übliche Substituenten sind z.B. Halogen (z.B. Chlor), Epoxid (z.B. Glycidyl oder Glycidyloxy), Hydroxy, Ether, Ester, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Alkoxy, Isocyanato, Aldehyd, Keto, Alkylcarbonyl, Säureanhydrid und Phosphorsäure. Diese Substituenten sind über zweiwertige Brückengruppen, insbesondere Alkylen-, Alkenylen- oder Arylen-Brückengruppen, die durch Sauerstoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z.B. von den oben genannten einwertigen Alkyl-, Alkenyl- oder Arylresten ab. Natürlich kann der Rest R auch mehr als eine funktionelle Gruppe aufweisen.

Bevorzugte Beispiele für hydrolytisch nicht abspaltbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxycyclohexyl)ethyl, ein (Meth)acryloxy-(C₁₋₆)-alkylen-Rest, z.B. (Meth)acryloxymethyl, (Meth)acryloxyethyl, (Meth)acryloxypropyl oder (Meth)acryloxybutyl, und ein 3-lsocyanatopropylrest. Besonders bevorzugte Reste sind γ-Glycidyloxypropyl und (Meth)acryloxypropyl. Hierbei steht (Meth)acryl für Acryl und Methacryl.

Insbesondere für eine Anwendung, bei der das Verfahren für eine Änderung des Benetzungsverhaltens der geologischen Formationen eingesetzt wird, können Silane der Formel (I) verwendet werden, die am Rest R mindestens ein Fluoratom aufweisen. Diese Ausführungsform wird weiter unten erläutert. Die Fluorsilane können auch für die Konsolidierung verwendet werden. Die weiter unten beschriebenen Fluorsilane der Formel (IV) können allein oder bevorzugt mit weiteren nicht fluorhaltigen Silanen der Formel (I) als Silane der Formel (I) verwendet werden.

Bevorzugte Reste R sind Reste ohne Substituenten oder funktionelle Gruppen, insbesondere Alkylgruppen, vorzugsweise mit 1 bis 4 Kohlenstoffatomen, insbesondere Methyl und Ethyl, sowie Arylreste wie Phenyl. Beispiele für Organosilane der allgemeinen Formel (I) sind Verbindungen der folgenden Formeln, wobei die Alkylsilane und insbesondere Methyltriethoxysilan besonders bevorzugt sind: CH₃-SiCl₃, CH₃-Si(OC₂H_{S})₃, C₂H₅-SiCl₃, C₂H₅-Si(OC₂H₅)₃, C₃H₇Si(OC₂H₅₎₃, C₆H₅-Si(OC₂H₅)₃, (C₂H_{S}O)₃-Si-C₃H₆-Cl, (CH₃)₂SiCl₂, (CH₃)₂Si(OC₂H₅)₂, (CH₃)₂Si(OH)₂, (C₆H₅)₂SiCl₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃, CH₂=CH-Si(OC₂H₄OCH₃)₃, CH₂=CH-CH₂=Si(OC₂H₅)₃, CH₂=CH-CH₂-Si(OC₂H₅)₃, CH₂=CH-CH₂-Si(OOCCH₃)₃, CH₂=C(CH₃)COO-C₃H₇Si(OC₂H₅)₃, n-C₆H₁₃-CH₂-CH₂-Si(OC₂H₅)_{3,}

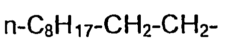

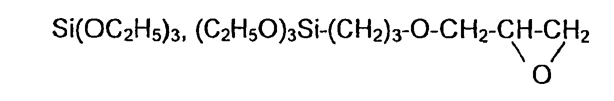

Beispiele für die optionalen hydrolysierbaren Silane der allgemeinen Formel (II) sind Si(OCH₃)₄, Si(OC₂H₅)₄, Si(O-n- oder i-C₃H₇)₄, Si(OC₄H₉)₄, SiCl₄, HSiCl₃, Si(OOCCH₃)_{4.}
Von diesen hydrolysierbaren Silanen ist Tetraethöxysilan besonders bevorzugt.

Die Silane lassen sich nach bekannten Methoden herstellen; vgl. W. Noll, "Chemie und Technologie der Silicone", Verlag Chemie GmbH, Weinheim/Bergstraße (1968).

Bei der Metallverbindung der allgemeinen Formel (III)

Mxₐ (III)

ist M ein Metall der Hauptgruppen III bis V oder der Nebengruppen II bis VIII des Periodensystems der Elemente einschließlich Bor, X wie in Formel (I) definiert, wobei zwei Gruppen X durch eine Oxogruppe ersetzt sein können, und entspricht a der Wertigkeit des Elements.

M ist von Si verschieden. Bor wird hier auch zu den Metallen gezählt. Beispiele für derartige Metallverbindungen sind Verbindungen von glas- oder keramikbildenden Elementen, insbesondere Verbindungen mindestens eines Elements M aus den Hauptgruppen III bis V und/oder den Nebengruppen II bis IV des Periodensystems der Elemente. Vorzugsweise handelt es sich dabei um hydrolysierbare Verbindungen von AI, B, Sn, Ti, Zr, V oder Zn, insbesondere solche von AI, Ti oder Zr, oder Mischungen aus zwei oder mehreren dieser Elemente. Ebenfalls einsetzbar sind z.B. hydrolysierbare Verbindungen von Elementen der Nebengruppen V bis VIII des Periodensystems (z.B. Mn, Cr, Fe und Ni). Auch hydrolysierbare Verbindungen der Lanthanoiden wie Ce können verwendet werden. Bevorzugt sind Metallverbindungen der Elemente B, Ti, Zr und AI, wobei Ti besonders bevorzugt ist.

Bevorzugte Metallverbindungen sind z. B. die Alkoxide von B, AI, Zr und insbesondere Ti. Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O₋i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-diketon- und (Meth)acrylreste, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

In einer besonders bevorzugten Ausführungsform wird das Konsolidierungsmittel unter Verwendung eines Alkylsilans wie Methyltriethoxysilan (MTEOS), eines Arylsilans wie Phenyltriethoxysilan und eines Orthokieselsäureesters wie Tetraethoxysilan (TEOS) und einer Metallverbindung der Formel (III) hergestellt, wobei die Verwendung einer Metallverbindung von B, Al, Zr und insbesondere Ti besonders bevorzugt ist.

Zur Herstellung des Hydrolysats oder Vorkondensate - werden vorzugsweise mindestens 50 Mol-%, bevorzugter mindestens 70 Mol-% und insbesondere mindestens 80 Mol-% Organosilane der Formel (I) mit mindestens einer hydrolytisch nicht abspaltbaren Gruppe verwendet. Der Rest sind hydrolysierbare Verbindungen, insbesondere die Metallverbindungen der Formel (III) und gegebenenfalls die hydrolysierbaren Silane der Formel (II), die keine hydrolytisch nicht abspaltbaren Gruppen aufweisen.

Das molare Verhältnis von eingesetzten Siliciumverbindungen der Formeln (I) und (II) zu eingesetzten Metallverbindungen der Formel (III) liegt im Bereich von 8.000:1 bis 8:1, wobei im Bereich von 1.600:1 bis 160:1 und besonders bevorzugt von 1.600:1 bis 16:1 eine besonders gute Hydrolysestabilität erreicht wird.

Für die Berechnung von der molaren Anteile bzw. Verhältnisse, die vorstehend angegeben sind, wird bei den Verbindungen jeweils von den monomeren Verbindungen ausgegangen. Wenn wie nachstehend erläutert bereits vorkondensierte Verbindungen (Dimere usw.) als Ausgangsmaterialien eingesetzt werden, ist auf die entsprechenden Monomere umzurechnen.

Die Hydrolysate oder Vorkondensate des Konsolidierungsmittels werden aus den hydrolysierbaren Silanen und den hydrolysierbaren Metallverbindungen durch Hydrolyse und Kondensation erhalten. Unter Hydrolysaten oder Vorkondensaten werden dabei insbesondere hydrolysierte bzw. zumindest teilweise kondensierte Verbindungen der hydrolysierbaren Ausgangsverbindungen verstanden. Statt der hydrolysierbaren Monomerverbindungen können auch bereits vorkondensierte Verbindungen eingesetzt werden. Derartige, im Reaktionsmedium vorzugsweise lösliche Oligomere können z.B. geradkettige oder cyclische niedermolekulare Teilkondensate (z.B. Polyorganosiloxane) mit einem Kondensationsgrad von z.B. etwa 2 bis 100, insbesondere etwa 2 bis 6, sein.

Die Hydrolysate oder Vorkondensate werden vorzugsweise durch Hydrolyse und Kondensation der hydrolysierbaren Ausgangsverbindungen nach dem Sol-Gel-Verfahren erhalten. Beim Sol-Gel-Verfahren werden die hydrolysierbaren Verbindungen mit Wasser, gegebenenfalls in Gegenwart von sauren oder basischen Katalysatoren hydrolysiert und gewöhnlich zumindest teilweise kondensiert. Vorzugsweise erfolgt die Hydrolyse und Kondensation in Gegenwart saurer Kondensationskatalysatoren (z.B. Salzsäure, Phosphorsäure oder Ameisensäure) bei einem pH-Wert von vorzugs-weise 1 bis 3. Das sich bildende Sol kann durch geeignete Parameter, z.B. Kondensationsgrad, Lösungsmittel oder pH-Wert, auf die für das Konsolidierungsmittel gewünschte Viskosität eingestellt werden.

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,55 bis 0,65 Mol Wasser, pro Mol der vorhandenen hydrolysierbaren Gruppen erzielt.

Vor der Anwendung kann das Konsolidierungsmittel durch Zusatz einer weiteren Wassermenge aktiviert werden. Das erfindungsgemäß verwendete Konsolidierungsmittel liegt insbesondere partikelfrei als Lösung oder Emulsion vor.

Es kann herkömmliche Additive enthalten und insbesondere Lösungsmittel wie Wasser, Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₈-Alkoholen, Amide, wie Dimethylformamid, Tetrahydrofuran, Dioxan, Sulfoxide, Sulfone oder Butylglycol und deren Gemische. Bevorzugt werden Wasser und Alkohole verwendet. Es können auch hochsiedende Lösungsmittel eingesetzt werden, z.B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Heteroaromaten und halogenierte Kohlenwasserstoffe. Anwendung können auch Dicarbonsäureester wie Bernsteinsäuredimethylester, Adipinsäuredimethylester, Glutarsäuredimethylester und deren Mischungen sowie die cyclische Carbonsäureester wie z.B. Propylencarbonat und Glycerincarbonat finden.

Andere herkömmliche Additive sind z. B. Farbstoffe, Pigmente, Viskositätsregulatoren und Tenside. Für die Herstellung von Emulsionen des Konsolidierungsmittels können die bei Siliconemulsionen üblichen stabilisierenden Emulgatoren wie z. B. Tween® 80 und Brij® 30 herangezogen werden.

Zur Herstellung von konsolidierten geologischen Formationen wird das Konsolidierungsmittel in die geologische Formation infiltriert oder injiziert.

Die Konsolidierung (Härtung) erfolgt unter erhöhter Temperatur und erhöhtem Druck, bezogen auf die Normalbedingungen, d.h. der Druck ist größer als 1 bar und die Temperatur ist höher als 20°C. Bevorzugt wird das Konsolidierungsmittel entsprechend den geologischen Rahmenbedingungen des Reservoirs, in der es eingesetzt wird, in der Regel bei Temperaturen oberhalb 40°C und Drücken von mindestens 40 bar gehärtet. In Abhängigkeit von der Formationstiefe können Temperaturen bis 160°C und Drücke bis 500 bar auftreten.

Es ist bekannt, dass eine thermische Härtung von Konsolidierungsmitteln unter Umgebungsdruck recht unproblematisch ist. Durch das kontinuierliche Entfernen des Lösungsmittels und des Reaktionsproduktes Wasser aus der Mischung von Bindemittelsol und zu konsolidierendem Material kommt es konsekutiv zu einer fortschreitenden Kondensationsreaktion. Im weiteren thermischen Härtungsprozess wird das Konsolidierungsmittel auf dem zu verfestigenden Material verdichtet.

Die Eigenschaften von konsolidierten Materialien hängen aber auch von den Bedingungen ab, unter denen sie hergestellt werden. In der Regel erhält man ein verbessertes Verhalten der konsolidierten Materialien, wenn sie bei etwa den gleichen Bedingungen hergestellt werden, bei denen sie eingesetzt werden sollen. Für Anwendungen von konsolidierten Materialien bei erhöhten Drücken und Temperaturen ist es daher wünschenswert, auch die Herstellung unter etwa den gleichen Bedingungen durchzuführen. Dies ist aber für die Konsolidierungsmittel nach dem Stand der Technik problematisch, da bei einer Härtung von Konsolidierungsmitteln nach dem Stand der Technik bei erhöhtem Druck und erhöhter Temperatur, d. h. unter Hydrothermalbedingungen, Lösungsmittel und Reaktionsprodukte im System verbleiben und lediglich eine Gleichgewichtseinstellung ermöglichen. Die Gleichgewichtslage unter diesen Bedingungen liefert jedoch keine verfestigten bzw. konsolidierten Materialien.

Es wurde überraschenderweise festgestellt, dass die Gleichgewichtslage durch den Einsatz der Metallverbindungen der Formel (III) gemäß der Erfindung verändert wird, so dass ein Abbinden des eingesetzten Konsolidierungsmittels unter Hydrothermalbedingungen (erhöhtem Druck und erhöhter Temperatur) möglich wurde. Auf diese Weise können konsolidierte geologischen Formationen unter Hydrothermalbedingungen erhalten werden, wobei die konsolidierten Formationen gute Bindefestigkeiten bei ausreichender Flexibilität aufweisen.

Die Härtung des Konsolidierungsmittels unter Hydrothermalbedingungen kann auch durch Zugabe von Anhydriden zum Konsolidierungsmittel unterstützt werden. Mit Hilfe der Anhydride können Kondensationsprodukte wie Wasser und Ethanol abgefangen werden. Bei den Anhydriden handelt es sich bevorzugt um Anhydride von organischen Säuren oder Mischungen von diesen Anhydriden. Beispiele sind Essigsäureanhydrid, Methylnadinsäureanhydrid, Phthalsäureanhydrid, Bernsteinsäureanhydrid sowie Mischungen davon.

Bei der Zugabe von Anhydriden ist es bevorzugt, z.B. cyclische Kohlensäureester, wie Propylencarbonat, oder Carbonsäureester, wie Glutarsäuredimethylester, Adipinsäuredimethylester und Bernsteinsäuredimethylester, oder Dicarbonsäuredimethylester-Mischungen aus den genannten Estern, als Lösungsmittel zu verwenden. In der Regel kann hierfür das geeignete Lösungsmittel durch das bei der Herstellung des Konsolidierungsmittels verwendete oder gebildete Lösungsmittel vollständig oder teilweise ausgetauscht werden. Neben dem Lösungsmittelaustausch ist es auch möglich, schon bei Herstellung des Konsolidierungsmittels ein bevorzugtes Lösungsmittel einzusetzen.

Die Härtung von zu konsolidierenden geologischen Formationen ist somit unter Hydrothermalbedingungen möglich.

Da unter Hydrothermalbedingungen ein Verdichtungsprozeß des gelierten Konsolidierungsmittels verhindert wird, verschließt das Konsolidierungsmittelgel häufig großvolumig die Poren. Dies kann bevorzugt durch Durchleiten eines festen oder flüssigen Mediums in das zu konsolidierende Material, das mit dem Konsolidierungsmittel vermengt ist, verhindert bzw. beseitigt werden, wodurch die Porosität in der gewünschten Weise eingestellt werden kann. Die Einleitung erfolgt insbesondere vor oder während des Härtungsvorgangs über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂, CO₂ oder Luft, eingepumpt werden, wodurch die Porenvolumina freigespült und Reaktionsprodukte abgeführt werden. Als Beispiele für Lösungsmittel für das flüssige Medium kann auf die vorstehend aufgeführten verwiesen werden. Das flüssige oder gasförmige Medium kann gegebenenfalls Katalysatoren und/oder Gas freisetzende Komponenten enthalten bzw. damit beladen sein.

Die Härtung des Konsolidierungsmittels kann gegebenenfalls durch Zufuhr von Kondensationskatalysatoren unterstützt werden, die eine Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen oder Säuren, aber auch Fluoridionen oder Alkoxide. Diese können z.B. dem Konsolidierungsmittel kurz vor der Vermengung mit der geologischen Formation zugegeben werden. In einer bevorzugten Ausführungsform werden die vorstehend beschriebenen gasförmigen oder flüssigen Medien, die durch die geologische Formation geleitet werden, mit dem Katalysator beladen. Der Katalysator ist dabei bevorzugt flüchtig, gasförmig oder verdampfbar. Der Katalysator kann gelöste Stoffe wie beispielsweise Zirconiumoxychlorid enthalten und in Form eines Gradienten zum Bindemittel zudosiert werden.

Die konsolidierten geologischen Formationen sind vorzugsweise porös.

Zur Simulation des Verfahrens unter Hydrothermalbedingungen wird bevorzugt eine in der Ölindustrie üblicherweise verwendete sogenannte "Displacement Cell" eingesetzt. In dieser Zelle wird ein zylindrischer Probekörper, der die zu konsolidierenden Probe enthält, über die Mantelfläche aus Blei mit einem Confinement-Druck, welcher den geologischen Formationsdruck (z.B. 70 bar) simuliert, beaufschlagt und verdichtet. Über die Stirnflächen des Probezylinders erfolgt der Medienein- bzw. austrag gegen einen Gegendruck von 50 bar. Zur thermischen Aushärtung wird die Zelle temperiert. Die resultierende Porosität und Permeabilität erreichen mehr als 80% der ursprünglichen Werte bei Festigkeiten bis 1,6 MPa.

Das erfindungsgemäße Konsolidierungsmittel ermöglicht aufgrund seiner chemischen Konstitution eine schnelle und wirksame Verfestigung von öl- oder wasserführenden, meist sandhaltigen geologischen Formationen. In diesem Zusammenhang hat sich der Einsatz von Phenylsilanalkoxiden besonders bewährt. Dies beruht vermutlich darauf, dass diese Verbindungen aufgrund der sterischen Hinderung der Phenylgruppe und der elektronischen Effekte nicht rasch abreagierbare OH-Gruppen aufweisen, die sich besonders gut mit der Oberfläche von anorganischen Materialien verbinden.

Weiter wurde gefunden, dass sich solche Systeme auch besonders gut für ölverschmutzte Partikel eignen, da das Konsolidierungsmittel die Ölschicht auf der anorganischen Oberfläche unterwandern und ablösen kann, wodurch Brückenbindungen zwischen benachbarten Granulatteilchen ermöglicht werden. Letzteres hat den zusätzlichen Effekt, dass solche Systeme auch dazu geeignet sind, Fette und Öle von anorganischen Oberflächen abzulösen und z. B. den Austrag solcher Substanzen aus den Zwickeln von Sandschüttungen oder auch geologischen Formationen zu verbessern. Es gelingt somit, Bindungsprozesse in ölhaltigen Sanden zu realisieren und solche Sande von Öl zu reinigen.

Hierfür kann das Hydrolysat oder Vorkondensat des Konsolidierungsmittels eine Komponente enthalten, die oleophob und hydrophob ist, wodurch das Benetzungsverhalten von geologischen Formationen verändert werden kann. Dies stellt eine zusätzliche bevorzugte Ausführungsform dar. Die oleophobe und hydrophobe Komponente kann bevorzugt an das Hydrolysat oder Vorkondensat des Konsolidierungsmittels gebunden oder darin enthalten sein, wobei es in beiden Fällen Bestandteil des Hydrolysats oder Kondensats wird.

Vorzugsweise ist die oleophobe und hydrophobe Komponente des Hydrolysats oder Vorkondensats aus einem oder mehreren Silanen der allgemeinen Formel (IV)

Rf(R)_{b}SiX(_{3-b}) (IV)

worin X und R wie in Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist, gebildet. Diese Verbindungen werden im folgenden auch als Fluorsilane bezeichnet.

Das Fluorsilan kann z.B. als Silan der Formel (I) zur Herstellung des Hydrolysats oder Vorkondensats eingesetzt werden. Es kann als einziges Silan der Formel (I) verwendet werden, bevorzugt wird es aber zusammen mit anderen Silanen der Formel (I) zur Herstellung des Hydrolysats oder Vorkondensats verwendet. In einer bevorzugten Ausführungsform wird zunächst ein Hydrolysat oder Vorkondensat ohne Fluorsilane gemäß den obigen Ausführungen hergestellt und anschließend mit einem oder mehreren Fluorsilanen der Formel (IV) vermischt. In diesem Fall können sich die Fluorsilane an das bereits gebildete Hydrolysat oder Kondensat anlagern bzw. anbinden. In beiden Fällen sind die aus dem Fluorsilan erhaltenen Hydrolysate oder Vorkondensate Bestandteil des Hydrolysats oder Vorkondensats, wobei im letzteren Fall die Anreicherung der Fluorkomponenten im äußeren Bereich verstärkt wird. Bei Verwendung des Silans der Formel (IV) wird es für die Bestimmung des molaren Verhältnisses von verwendeten Siliciumverbindungen zu Metallverbindungen berücksichtigt.

In der Formel (IV) ist Rf vorzugsweise eine fluorierte Alkylgruppe, z.B. mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂. Ein bevorzugtes Beispiel für Rf ist 1H,1H,2H,2H-Perfluoroctyl.

Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂Fs-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃₋CH2CH₂-Si(OCH₂CH₃)₂, n-C₆F₁₃-CH₂CH₂-SiCl₂(CH₃) und n-C₆F₁₃-CH₂CH₂-Sicl(CH₃)₂.

Durch den Einsatz von oleophoben und hydrophoben Komponenten im Konsolidierungsmittel kann das Benetzungsverhalten der geologischen Formationen geändert werden. Dadurch kann das Konsolidierungsmittel sowohl eine Konsolidierung als auch eine Änderung des Benetzungsverhaltens bewirken. Bei letzteren Anwendungen kann die Konsolidierungsfunktion aber auch eine untergeordnete oder gar keine Rolle spielen. In diesen Fällen wirkt es eher als ein die Benetzung regulierendes Mittel, die Bezeichnung als Konsolidierungsmittel wird aber beibehalten.

Bei Verfahren, die zur Änderung des Benetzungsverhaltens dienen, kann es zweckmäßig sein, das Konsolidierungsmittel in hoher Verdünnung zu verwenden, z.B. mit einem Feststoffgehalt von maximal 10 Gew%.

Um eine Änderung des Benetzungsverhaltens zu ermöglichen, kann das Konsolidierungsmittel in die geologische Formation infiltriert oder injiziert werden.

Das erfindungsgemäße Konsolidierungsverfahren kann mit Vorteil bei der Gas- oder Erdölförderung, eingesetzt werden, insbesondere zur Verfestigung von geologischen Sandformationen in öl- oder wasserführenden Reservoirs, z.B. im Bohrlochbereich.

Die Änderung des Benetzungsverhaltens von geologischen Formationen durch das erfindungsgemäße Verfahren kann z.B. zur Steigerung des Ausbeutegrades von ölführenden Formationen genutzt werden. Eine andere Anwendung ist die Änderung des Benetzungsverhaltens einer toxikologisch belasteten geologischen Formation, wie eines Industriebodens, um eine Regenerierung der Formation durch erleichterte Reinigung zu ermöglichen. Das System ist auch für die Reinigung von ölverschmutzten Sanden geeignet.

Es können mit dem Konsolidierungsmittel gebundene poröse Formationen z.B. aus Sand erhalten werden, bei denen die Porosität durch das Einblasen eines Mediums wie Luft, das gegebenenfalls mit flüchtigen Katalysatoren versetzt ist, erzeugt bzw. aufrechterhalten wird. Mit Wasser oder Erdöl "gefüllte" Formationen besitzen bereits vor dem Binden mit dem Konsolidierungsmittel eine Porosität im engeren Sinne. Versucht man nach dem Einbringen des noch nicht ausgehärteten Konsolidierungsmittels dieses durch Einbringen flüssiger Katalysatoren zu härten, erfolgt zwar eine Härtung, aber durch das ausgehärtete Konsolidierungsmittel werden die Poren verstopft.

Das folgende Beispiel erläutert die Erfindung.

### Beispiel

Beeinflussung des Benetzungsverhaltens von ölführenden Formationen zur Steigerung des Ausbeutegrades von Formationen

### a) Konsolidierungsmittel MTTi_{0.1}P₃ 06

26,2 g MTEOS, 7,64 g TEOS und 0,087 g Titantetraisopropoxid wurden gemischt und unter starkem Rühren mit 12,63 g entionisiertem Wasser und 0,088 ml konzentrierter Salzsäure (37%) zur Reaktion gebracht. Nach dem Umschlagspunkt überschritt das Reaktionsgemisch ein Temperaturmaximum von 62°C. Nach Abkühlen der Reaktionsmischung auf 47°C wurde eine weitere Silanmischung, die aus 26,45 g Phenyltriethoxysilan, 6,54 g MTEOS und 7,64 g TEOS besteht, zum Ansatz gegeben und noch 5 Minuten weitergerührt. Nach Stehen über Nacht ist der Binder zur Konsolidierung von Formationssand unter Hydrothermalbedingungen geeignet. Der pH-Wert kann je nach Anforderungen im Bereich zwischen pH 0 und 7 eingestellt werden.

### b) Behandlung der Formation

250 g MTTi_{0,1}P₃ 06 nach Beispiel 1 werden mit 7,5 g 1H,1H,2H,2H-Perfluorooctyltriethoxysilan (FTS) versetzt und über Nacht bei RT gerührt. Zur Verwendung als benetzungsregulierendes Konsolidierungsmittel für poröse, öltragende Formationen werden 100 g des obigen Ansatzes mit 220 g Diethylenglycolmonoethylether verdünnt. Nach Infiltration in poröse Sandsteine wird das Benetzungsverhalten mit Hilfe eines Imbibitions-Tests als neutral ermittelt. Ein beschichteter Sandstein wird zur Ermittlung der Hydrolysebeständigkeit in künstlicher Salzlösung bei 70 bar und 120°C einer Hydrothermalbehandlung für 16 h unterzogen. Nach Trocknung wird der Imbibitions-Test durchgeführt. Das Benetzungsverhalten bleibt unverändert neutral.

## Patentansprüche

1. Verfahren für eine unter Hydrothermalbedingungen hydrolytisch beständige Konsolidierung oder eine Änderung des Benetzungsverhaltens von porösen oder partikulären geologischen Formationen, bei dem man
(A) ein Konsolidierungsmittel, umfassend ein Hydrolysat oder Vorkondensat von
(a) mindestens einem Organosilan der allgemeinen Formel (I)
RₙSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
(b) gegebenenfalls mindestens einem hydrolysierbaren Silan der allgemeinen Formel (II)
SiX₄ (II)
worin die Reste X die vorstehende Bedeutung haben; und
(c) mindestens einer hydrolysierbaren Metallverbindung der allgemeinen Formel (III)
MXₐ (III)
worin M ein Metall der Hauptgruppen III bis V oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
wobei das molare Verhältnis von eingesetzten Siliciumverbindungen zu eingesetzten Metallverbindungen im Bereich von 8.000:1 bis 8:1 liegt,
in die geologische Formation einbringt und
(B) das Konsolidierungsmittel bei einer Temperatur höher als 20°C und einem Druck größer als 1 bar härtet, wobei
das Konsolidierungsmittel vor der Vermengung mit der geologischen Formation partikelfrei vorliegt.

2. Verfahren nach Anspruch 1 zur hydrolytisch und hydrothermal beständigen Konsolidierung der geologischen Formation, wobei man dass Konsolidierungsmittel in die geologische Formation infiltriert oder injiziert.

3. Verfahren nach Anspruch 1 oder Anspruch 2, **dadurch gekennzeichnet, dass** das Konsolidierungsmittel bei einer Temperatur von mindestens 40°C und einem Druck von mindestens 40 bar gehärtet wird.

4. Verfahren nach einem der Ansprüche 1 bis 3, **dadurch gekennzeichnet, dass** das Metall der Metallverbindung der allgemeinen Formel (III) aus B, Al, Zr und insbesondere Ti ausgewählt wird.

5. Verfahren nach einem der Ansprüche 1 bis 4, **dadurch gekennzeichnet, dass** vor und/oder während der Härtung für einen bestimmten Zeitraum ein flüssiges oder gasförmiges Medium, insbesondere Luft, durch die zu konsolidierende geologische Formation, die mit dem Konsolidierungsmittel in Kontakt ist, geleitet wird, um die Porosität einzustellen.

6. Verfahren nach Anspruch 5, **dadurch gekennzeichnet, dass** das flüssige oder gasförmige Medium mit flüchtigen, gasförmigen oder verdampfbaren Säuren, Basen oder anderen Katalysatoren beladen wird.

7. Verfahren nach einem der Ansprüche 1 bis 6, **dadurch gekennzeichnet, dass** das Konsolidierungsmittel ein Hydrolysat oder Vorkondensat von (a1) einem Alkylsilan, (a2) einem Arylsilan, (b) einem Orthokieselsäureester und (c) einem Metallalkoxylat umfasst.

8. Verfahren nach einem der Ansprüche 1 bis 7, **dadurch gekennzeichnet, dass** das Konsolidierungsmittel nach dem Sol-Gel-Verfahren mit einer unterstöchiometrischen Wassermenge, bezogen auf die vorhandenen hydrolysierbaren Gruppen, hergestellt wird.

9. Verfahren nach einem der Ansprüche 1 bis 8, **dadurch gekennzeichnet, dass** das Konsolidierungsmittel vor der Vermengung mit der geologischen Formation als Lösung oder Emulsion vorliegt.

10. Verfahren nach einem der Ansprüche 1 bis 9, **dadurch gekennzeichnet, dass** das Konsolidierungsmittel einen cyclischen Kohlensäureester oder einen Carbonsäureester als Lösungsmittel umfasst.

11. Verfahren nach einem der Ansprüche 1 bis 10, **dadurch gekennzeichnet, dass** die geologische Formation Sand oder Sandstein umfasst oder eine Sandformation ist, insbesondere eine öl- oder wasserführende geologische Formation.

12. Verfahren nach einem der Ansprüche 1 bis 11, **dadurch gekennzeichnet, dass** eine lose Formation konsolidiert wird.

13. Verfahren nach einem der Ansprüche 1 bis 11, **dadurch gekennzeichnet, dass** eine ölhaltige lose Formation konsolidiert wird.

14. Verfahren nach einem der Ansprüche 1 bis 11 zur Änderung des Benetzungsverhaltens der geologischen Formation, wobei dass Hydrolysat oder Vorkondensat des Konsolidierungsmittels eine Komponente umfasst, die oleophob und hydrophob ist, um das Benetzungsverhalten der geologischen Formation zu verändern.

15. Verfahren nach Anspruch 14, **dadurch gekennzeichnet, dass** die oleophobe und hydrophobe Komponente an das Vorkondensat des Konsolidierungsmittels gebunden oder darin enthalten ist.

16. Verfahren nach Anspruch 14 oder Anspruch 15, **dadurch gekennzeichnet, dass** die oleophobe und hydrophobe Komponente durch Verwendung von einem oder mehreren Silanen der allgemeinen Formel (IV)
Rf(R)_{b}SiX_{(3-b)} (IV)
worin X und R wie in Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist, für die Herstellung des Hydrolysats oder Kondensats des Konsolidierungsmittels erhalten wird, wobei das Silan der Formel (IV) für die Bestimmung des molaren Verhältnisses von Siliciumverbindungen zu Metallverbindungen berücksichtigt wird.

17. Verfahren nach einem der Ansprüche 14 bis 16, **dadurch gekennzeichnet, dass** das Silan der Formel (IV) allein als Silan der Formel (I) oder zusammen mit mindestens einem weiteren nicht fluorhaltigen Silan der Formel (I) für die Herstellung des Hydrolysats oder Kondensats des Konsolidierungsmittels eingesetzt wird.

18. Verfahren nach Anspruch 17, **dadurch gekennzeichnet, dass** das Silan der Formel (IV) zu einem bereits mit mindestens einem nicht fluorhaltigen Silans der Formel (I) hergestellten Hydrolysat oder Kondensat des Konsolidierungsmittels gegeben wird, um eine Anbindung des Silans der Formel (IV) an das Hydrolysat oder Kondensat zu erhalten.

19. Verfahren nach einem der Ansprüche 14 bis 18, **dadurch gekennzeichnet, dass** das Benetzungsverhalten einer für die Förderung von Öl genutzten geologischen Formation geändert wird, um die Produktivität der Erdölförderung zu erhöhen.

20. Verfahren nach einem der Ansprüche 14 bis 18, **dadurch gekennzeichnet, dass** das Benetzungsverhalten einer toxikologisch belasteten oder ölverschmutzten geologischen Formation geändert wird, um die Reinigung der Formation zu erleichtern.

## Claims

1. A process for a consolidation stable hydrolytically under hydrothermal conditions or for a change in the wetting behavior of porous or particulate geological formations, in which
(A) a consolidant comprising a hydrolyzate or precondensate of
(a) at least one organosilane of the general formula (I)
RₙSiX₄₋ₙ (I)
in which the R radicals are the same or different and are each hydrolytically non-removable groups, the X radicals are the same or different and are each hydrolytically removable groups or hydroxyl groups and n is 1, 2 or 3,
(b) optionally at least one hydrolyzable silane of the general formula (II)
SiX₄ (II)
in which the X radicals are each as defined above, and
(c) at least one metal compound of the general formula (III)
MXₐ (III)
in which M is a metal of main groups III to V or of transition groups II to VIII of the Periodic Table of the Elements including boron, X is as defined in formula (I), where two X groups may be replaced by one oxo group, and a corresponds to the valence of the element,
where the molar ratio of silicon compounds used to metal compounds used is in the range from 8000:1 to 8:1,
is introduced into the geological formation and
(B) the consolidant is cured at a temperature above 20°C and at a pressure greater than 1 bar,
the consolidant being present in particle-free form before the mixing with the geological formation.

2. The process as claimed in claim 1 for the hydrolytically and hydrothermally stable consolidation of the geological formation, in which consolidant is infiltrated or injected into the geological formation.

3. The process as claimed in claim 1 or claim 2, wherein the consolidant is cured at a temperature of at least 40°C and a pressure of at least 40 bar.

4. The process as claimed in one of claims 1 to 3, wherein the metal of the metal compound of the general formula (III) is selected from B, Al, Zr and especially Ti.

5. The process as claimed in one of claims 1 to 4, wherein, before and/or during the curing step, a liquid or gaseous medium, especially air, is passed for a certain period through the geological formation which is to be consolidated and comes into contact with the consolidant in order to adjust the porosity.

6. The process as claimed in claim 5, wherein the liquid or gaseous medium is laden with volatile, gaseous or evaporable acids, bases or other catalysts.

7. The process as claimed in one of claims 1 to 6, wherein the consolidant comprises a hydrolyzate or precondensate of (a1) an alkylsilane, (a2) an arylsilane, (b) an orthosilicic ester and (c) a metal alkoxylate.

8. The process as claimed in one of claims 1 to 7, wherein the consolidant is prepared by the sol-gel process with a substoichiometric amount of water based on the hydrolyzable groups present.

9. The process as claimed in one of claims 1 to 8, wherein the consolidant is present as a solution or emulsion before the mixing with the geological formation.

10. The process as claimed in one of claims 1 to 9, wherein the consolidant comprises a cyclic carbonic ester or a carboxylic ester as a solvent.

11. The process as claimed in one of claims 1 to 10, wherein the geological formation comprises sand or sandstone or is a sand formation, especially an oil- or water-bearing geological formation.

12. The process as claimed in any one of claims 1 to 11, wherein a loose formation is consolidated.

13. The process as claimed in any one of claims 1 to 11, wherein an oil-bearing loose formation is consolidated.

14. The process as claimed in one of claims 1 to 11 for changing the wetting behavior of the geological formation, the hydrolyzate or precondensate of the consolidant comprising a component which is oleophobic and hydrophobic, in order to change the wetting behavior of the geological formation.

15. The process as claimed in claim 14, wherein the oleophobic and hydrophobic component is bonded to the precondensate of the consolidant or is present therein.

16. The process as claimed in claim 14 or 15, wherein the oleophobic and hydrophobic component is obtained for the preparation of the hydrolyzate or condensate of the consolidant by use of one or more silanes of the general formula (IV)
Rf(R)_{b}SiX(_{3-b}) (IV)
in which X and R are each as defined in formula (I), Rf is a non-hydrolyzable group which has from 1 to 30 fluorine atoms bonded to aliphatic carbon atoms, and b is 0, 1 or 2, taking into account the silane of the formula (IV) for the determination of the molar ratio of silicon compounds to metal compounds.

17. The process as claimed in one of claims 14 to 16, wherein the silane of the formula (IV) is used alone as the silane of the formula (I) or together with at least one further non-fluorine-containing silane of the formula (I) for the preparation of the hydrolyzate or condensate of the consolidant.

18. The process as claimed in claim 17, wherein the silane of the formula (IV) is added to a hydrolyzate or condensate of the consolidant, said hydrolyzate or condensate already having been prepared with at least one non-fluorine-containing silane of the formula (I), in order to obtain bonding of the silane of the formula (IV) to the hydrolyzate or condensate.

19. The process as claimed in one of claims 14 to 18, wherein the wetting behavior of a geological formation utilized for the extraction of oil is changed in order to increase the productivity of mineral oil extraction.

20. The process as claimed in one of claims 14 to 18, wherein the wetting behavior of a toxicologically contaminated or oil-contaminated geological formation is changed in order to facilitate the cleaning of the formation.

## Revendications

1. Procédé permettant de consolider, de façon stable vis-à-vis d'une hydrolyse dans des conditions hydrothermiques, des formations géologiques poreuses ou particulaires ou de modifier leur comportement de mouillage, dans lequel procédé l'on incorpore dans une formation géologique :
A) un agent de consolidation, comprenant un produit d'hydrolyse ou de pré-condensation
a) d'au moins un organosilane de formule générale (I) :
RₙSiX₄₋ₙ (I)
dans laquelle les entités symbolisées par R sont identiques ou différentes et sont des groupes non séparables par hydrolyse, les entités symbolisées par X sont identiques ou différentes et sont des groupes séparables par hydrolyse ou des groupes hydroxyle, et l'indice n vaut 1, 2 ou 3 ;
b) éventuellement, d'au moins un silane hydrolysable de formule générale (II) :
SiX₄ (II)
dans laquelle les symboles X ont la signification donnée ci-dessus ;
c) et d'au moins un composé de métal hydrolysable, de formule générale (III) :
MXₐ (III)
dans laquelle M représente un atome d'un élément métallique des groupes principaux III à V ou des groupes secondaires II à VIII du Tableau Périodique des Eléments, y compris l'élément bore, les symboles X ont la signification indiquée ci-dessus à propos de la formule (I), et l'indice a correspond à la valence dudit élément ;
étant entendu que le rapport molaire des composés du silicium utilisés aux composés de métal utilisés vaut de 8000/1 à 8/1 ;
B) et l'on fait durcir cet agent de consolidation à une température supérieure à 20 °C et sous une pression supérieure à 1 bar,
étant entendu que l'agent de consolidation, avant d'être incorporé dans la formation géologique, se présente dans un état sans particules.

2. Procédé conforme à la revendication 1, permettant de consolider des formations géologiques de façon stable vis-à-vis d'une hydrolyse et de conditions hydrothermiques, dans lequel procédé l'agent de consolidation est infiltré ou injecté dans la formation géologique.

3. Procédé conforme à la revendication 1 ou 2, **caractérisé en ce que** l'on fait durcir l'agent de consolidation à une température d'au moins 40 °C et sous une pression d'au moins 40 bars.

4. Procédé conforme à l'une des revendications 1 à 3, **caractérisé en ce que** le métal du composé de métal de formule (III) est choisi parmi les éléments bore, aluminium, zirconium et, en particulier, titane.

5. Procédé conforme à l'une des revendications 1 à 4, **caractérisé en ce que**, avant et/ou pendant le durcissement, on fait passer pendant un certain temps un milieu liquide ou gazeux, en particulier de l'air, dans la formation géologique à consolider qui est en contact avec l'agent de consolidation, afin d'en ajuster le degré de porosité.

6. Procédé conforme à la revendication 5, **caractérisé en ce que** le milieu liquide ou gazeux est chargé d'acides, de bases ou d'autres catalyseurs volatils, gazeux ou vaporisables.

7. Procédé conforme à l'une des revendications 1 à 6, **caractérisé en ce que** l'agent de consolidation comprend un produit d'hydrolyse ou de pré-condensation (a1) d'un alkyl-silane, (a2) d'un aryl-silane, (b) d'un ester orthosilicate, et (c) d'un alcoolate de métal.

8. Procédé conforme à l'une des revendications 1 à 7, **caractérisé en ce que** l'agent de consolidation a été préparé suivant le procédé sol-gel, avec une quantité d'eau stoechiométriquement inférieure à la quantité de groupes séparables par hydrolyse présents.

9. Procédé conforme à l'une des revendications 1 à 8, **caractérisé en ce que** l'agent de consolidation, avant d'être incorporé dans la formation géologique, se présente sous forme de solution ou d'émulsion.

10. Procédé conforme à l'une des revendications 1 à 9, **caractérisé en ce que** l'agent de consolidation comprend, en tant que solvant, un ester de type carbonate cyclique ou un ester de type carboxylate.

11. Procédé conforme à l'une des revendications 1 à 10, **caractérisé en ce que** la formation géologique comprend du sable ou du grès, ou est une formation sableuse, en particulier une formation géologique aquifère ou pétrolifère.

12. Procédé conforme à l'une des revendications 1 à 11, **caractérisé en ce que** l'on consolide une formation ébouleuse.

13. Procédé conforme à l'une des revendications 1 à 11, **caractérisé en ce que** l'on consolide une formation pétrolifère ébouleuse.

14. Procédé conforme à l'une des revendications 1 à 11, permettant de modifier le comportement de mouillage d'une formation géologique, dans lequel le produit d'hydrolyse ou de pré-condensation de l'agent de consolidation comprend un composant qui est oléophobe et hydrophobe, afin de modifier le comportement de mouillage de la formation géologique.

15. Procédé conforme à la revendication 14, **caractérisé en ce que** le composant oléophobe et hydrophobe est lié au produit de pré-condensation de l'agent de consolidation ou inclus dedans.

16. Procédé conforme à la revendication 14 ou 15, **caractérisé en ce qu'**on obtient le composant oléophobe et hydrophobe en utilisant, pour préparer le produit d'hydrolyse ou de condensation de l'agent de consolidation, un ou plusieurs silane(s) de formule générale (IV) :
RfR(_{b})S1X_{3-b} (IV)
dans laquelle les symboles X et R ont les significations données à propos de la formule (I), Rf représente un groupe non séparable par hydrolyse et comportant 1 à 30 atomes de fluor liés à des atomes de carbone d'un groupe aliphatique, et l'indice b vaut 0, 1 ou 2, étant entendu que ce silane de formule (IV) est pris en compte dans l'évaluation du rapport molaire des composés du silicium aux composés de métal.

17. Procédé conforme à l'une des revendications 14 à 16, **caractérisé en ce que**, pour préparer le produit d'hydrolyse ou de condensation de l'agent de consolidation, on utilise le silane de formule générale (IV), seul en tant que silane de formule (I), ou conjointement avec au moins un autre silane non fluoré de formule (I).

18. Procédé conforme à la revendication 17, **caractérisé en ce que** l'on ajoute un silane de formule (IV) au produit d'hydrolyse ou de condensation de l'agent de consolidation, déjà préparé avec au moins un silane non fluoré de formule (I), de manière à ce que ce silane de formule (IV) se lie au produit d'hydrolyse ou de condensation.

19. Procédé conforme à l'une des revendications 14 à 18, **caractérisé en ce que** l'on modifie le comportement de mouillage d'une formation géologique exploitée pour la production de pétrole, afin d'en augmenter la productivité.

20. Procédé conforme à l'une des revendications 14 à 18, **caractérisé en ce que** l'on modifie le comportement de mouillage d'une formation géologique chargée de produits toxiques ou polluée par des produits pétroliers, afin d'en faciliter le nettoyage.
